# EUROPEAN PATENT SPECIFICATION

(11) **EP 2 244 275 B1**
(45) Date of publication and mention of the grant of the patent: **18.06.2014**
(21) Application number: 09382054.6
(22) Date of filing: 23.04.2009
(51) Int. Cl.: H01H 33/12, H01H 33/66, H01H 1/36, H01H 3/40, H01H 31/00

(54) **Switchgear for electric distribution networks**
Schaltanlage für Stromverteilungsnetze
Appareils de coupure pour réseau de distribution électrique

(43) Date of publication of application: 27.10.2010
(73) Proprietor: Ormazabal Y Cia., S.L.U., 48140 Igorre (Vizcaya) (ES)
(72) Inventor: Arteche Menchaca, Asier, 48140, Igorre (Vizcaya) (ES); Inchausti Sancho, José, Manuel, 48140, Igorre (Vizcaya) (ES); Sainz De La Maza Escobal, Norberto, 48140, Igorre (Vizcaya) (ES); Casado Cartón, Juan, Mª, 48140, Igorre (Vizcaya) (ES); Lopez Diez, Jaime, 48340 Amorebieta (Vizcaya) (ES)
(74) Representative: Carpintero Lopez, Francisco

(56) References cited:
- EP-A- 1 538 650
- WO-A-90/13932
- WO-A-93/20572
- DE-A1-102006 056 656
- US-A- 3 814 882

## Description

### Object of the Invention

The present invention has its field of application in electric power distribution installations, such as, for example, electric transformer centers, distribution centers, substations, etc., for the protection and operation of electric circuits in general and, in particular, it relates to a switchgear integrated inside an enclosure comprising a series of elements, among others, operating means which allow performing breaking and/or connection and/or sectioning and/or grounding operation functions for the electric circuit, such that said switchgear integrated in the mentioned enclosure allows configuring different electric diagrams.

### Background of the Invention

The operating switchgear used in electric power distribution networks is currently installed in usually metallic enclosures, called cells. Said switchgear comprises operating means carrying out the breaking - connection - sectioning - grounding functions for the installation. In this way, in the event that there is, for example, a fault in the distribution line, a breaking due to work, maintenance or load distribution optimization, such operating means may be actuated to obtain the desired electric power distribution, prevent consumers from being left without power or assure the protection of persons and electrical equipment such as transformers for example.

Each of said operating means conventionally has its own actuating element, which may be activated manually or automatically by a trigger mechanism responding to a fault current. The operating mechanisms produce the actuating force for performing breaking - connection - sectioning - grounding functions for the installation.

On one hand, operating means are known which are formed by vacuum switches, consisting of a vacuum switch inside which there is housed a pair of electrical contacts, one fixed and the other mobile, which shifts by the actuation of said switch to perform the breaking - connection - sectioning - grounding functions for the corresponding electric circuit.

The trouble with known vacuum switches is that the separation between the mobile and fixed contacts in an open-circuit situation is not acceptable, as it does not assure the sectioning function because the dielectric medium in which they act is the vacuum of the vacuum switch. One solution is to usually add, on the outside of the vacuum switch, a disconnector which opens/closes the circuit to perform said sectioning function effectively.

On the other hand, disconnectors are also used from which grounding functions are furthermore usually required. It is known that disconnectors are made up of two contacts which may be joined to let current pass through or to leave a physical separation determined by the safety regulation or the manufacturer to prevent the passage of current. In the case of disconnectors with a grounding function included, they comprise one more contact, specifically a grounding contact. However, said disconnectors are not capable of carrying out the functions of the switch, i.e., breaking the current when the circuit is loaded or in the event of an overcurrent fault. Accordingly, the operating switchgear has both switches and disconnectors with independent actuating elements.

Currently, the order in which the operating means act when performing the breaking - connection - sectioning - grounding functions for the electric circuit is such that when there is a fault, the switch breaks the current and then the disconnector opens the circuit, the circuit thus being sectioned. Once the sectioning is performed, the grounding disconnector connects the electric circuit to ground. In the connection operation, the predominant philosophy in relation to the order in which the operating means act is that first the disconnector closes the circuit (the disconnector closes the unloaded circuit) and then closes the switch, the latter withstanding all the thermal and electrodynamic stresses generated due to the short circuit caused in the closing of the contacts, stresses which are produced by the current intensity and the magnetic field created. These thermal and electrodynamic stresses present a risk for the contacts of the switch, being able to cause irreparable damage to the mentioned contacts if they are not eliminated quickly.

In this sense, several patent examples can be mentioned in which the order in which operating means acts is the one defined above. For example, patent application WO2006097457A1 defines an electric switchgear comprising, on one hand, a circuit breaker consisting of a vacuum circuit breaker, which performs the breaking - connection functions, whereas the connection - sectioning - grounding functions are performed by a three-position hinge-type rotary disconnector. In relation to order in which the operations are performed, when there is a fault, the vacuum circuit breaker is the one responsible for performing the breaking, the three-position disconnector being the one which then opens the electric circuit to keep it sectioned and later ground it. In the connection operation, first the three-position disconnector closes the completely unloaded electric circuit and then the vacuum circuit breaker performs the connection, withstanding all the thermal and electrodynamic stresses produced. As mentioned above, these stresses can cause the deterioration of the contacts of the vacuum circuit breaker and can even cause the contacts to be welded due to the high temperatures obtained in the short circuit. Patent documents EP1921646A2, WO2007031040A1, W02007051436A1 and W02008006915A1 also define solutions in which the order in which the operations are performed is the same as in patent application W02006097457A1.

It is therefore very important for the contacts of the switch to be in the best possible conditions in order to be able to break the current in the event of a fault, as well as to prevent unwanted phenomena, such as, for example, the deterioration or the possibility of welding of the contacts of the switch due to a pre-arc formed during the closing of the switch.

On the other hand, when breaking the current, in addition to the state of the contacts of the switch, it is essential for the opening speed to be adapted to the network frequency.

To minimize the breaking time, currently existing actuating elements, such as, for example, those described in the aforementioned patent registrations, perform said breaking at high opening speeds.

The main drawback of these actuating elements, especially from a safety point of view, is that once the possible breaking position is reached, there is a bounce effect of the mobile contact of the switch which occurs at the end of the opening travel as a result of the high breaking (opening) speed required so that the opening is performed at the opening speed adapted to the network frequency. The negative consequence of the bounce effect is that the contacts move closer to one another, which considerably increases the risk of a restrike occurring given the reduction in the distance therebetween, with the disastrous consequences that this involves, such as the deterioration of the contacts and the insulations, increase in the temperature and the pressure, etc.

This operating switchgear is usually insulated in a dielectric medium, which is usually air or another fluid medium, such as, for example, sulfur hexafluoride (SF₆), dry air, oil, etc., for the purpose of reducing the distance between phases and thus achieving a compact enclosure which is not sensitive to external or environmental conditions such as pollution or moisture. In this sense, depending on the dielectric medium used, the enclosure may or may not be tight.

A tight operating switchgear likewise comprises a tight coupling device for every operating means it has. The coupling device is specifically joined to a mobile contact of the operating means.

In the event that the operating switchgear is integrated in a tight enclosure, as a result of the insulating medium being gaseous, the coupling device transmits the actuating force produced by the individual operating mechanism of each operating means, gastight by means of a bellows. In this sense, the examples of patent applications WO2007031040A1 and W02007051436A1 can be mentioned, in which this actuating force transmission system is shown. This transmission system involves the drawback that for each phase of each operating means there is a coupling device traversing the tight enclosure, therefore the cells tend to be larger. Furthermore, the use of a bellows for each phase involves an important space inside the cells. Likewise, the use of these bellows involves a considerable increase in the final cost of the cells.

The international patent application WO90/13932 A1 describes a metal-encapsulated and gas-insulated switching device having a three-position switch for the "on", "off' and "earthed" positions and a vacuum power switch. Finally, the patent application US3814882 A1 relates to a hybrid circuit interrupter having a set of contacts in a vacuum environment and another set of contacts in an insulating fluid, such as oil, or gas or the like, environment connected in series and disposed in one compact enclosure.

### Description of the Invention

The invention is defined by the attached claim 1.

The present invention relates to an electric switchgear applicable in electric power distribution installations, such as, for example, electric transformer centers, distribution centers, substations, etc., for the protection and operation of electric circuits. Said switchgear comprises an enclosure, this enclosure being able to be tight, and therefore insulated in a fluid, such as, for example, sulfur hexafluoride (SF₆), dry air, oil, etc.

The switchgear of the invention comprises:
- operating means arranged between at least one bar of a main circuit and at least one bypass bar, said operating means comprising at least one switch and one disconnector connected in series (these operating means can be housed inside the enclosure)
- an actuating element configured to actuate the operating means such that they can perform breaking and/or connection and/or sectioning and/or grounding functions (the actuating element can be housed inside the enclosure).
- and an operating mechanism to cause the actuation of the actuating element (the operating mechanism can be arranged outside the enclosure).

According to the invention, the operating mechanism is configured such that the actuating element actuates the opening of the switch before the opening of the disconnector in a breaking - sectioning operation, but actuates the closing of the switch before the closing of the disconnector in the connection operation.

Depending on the exploitation practices and needs of the distribution network in which it is installed, the possibility of the disconnector being or not being a disconnector with closing capacity against a short circuit is contemplated.

As a result, given that in the connection operation, the disconnector closes after the switch, the latter does not experience any wear due to the pre-arc of the closing, the switch thus remaining in the best possible conditions to break the current in the event of a fault, and thus prevent unwanted phenomena, such as, for example, the deterioration or the possibility of welding of the contacts of the switch.

The operating mechanism can be configured such that the actuating element actuates the switch and the disconnector automatically, one after the other. The necessary operations in the breaking - sectioning operation and in the connection operation are thus reduced and the safety increases.

Furthermore, in the breaking - sectioning operation, with the fact that only a single operation is necessary to perform said functions, i.e., when there is a fault followed by the opening of the switch, the disconnector is automatically opened, "non-sustained disruptive discharges (NSDD)" phenomena are prevented, which discharges are discharges produced between the contacts of a vacuum circuit breaker during the power frequency recovery voltage period, causing a passage of high-frequency current linked to the parasitic capacity in the proximity of the switch. On the other hand, from the point of view of an operator the operation tasks are simplified, since a single operation has to be performed instead of having to perform two operations.

The switch, which is installed in series with the disconnector, performs the breaking - connection functions, said switch being either a load break switch or a circuit breaker. The switch can comprise a vacuum switch housing a fixed contact joined to the bar of the main circuit and a mobile contact which can shift according to a shift direction, the mentioned mobile contact being joined to a fixed contact of the disconnector by means of at least one conducting means.

The mobile contact can be associated to the actuating element through a first actuating transmission element, said actuating transmission element being in turn associated with a first drive shaft transverse to the shift direction (of the mobile contact of the switch). This first drive shaft cooperates with said actuating transmission element in performing the breaking - connection functions.

Likewise, said actuating transmission element can pivot about a rotating shaft transverse to the shift direction, such that the rotation of the first drive shaft due to the actuating force created by the operating mechanism causes the pivoting of the actuating transmission element about the mentioned rotating shaft. Due to this pivoting and given that the actuating element comprises a coupling part between the first actuating transmission element and at least one conducting means mentioned above, the rotation movement of the drive shaft is converted into a movement according to the shift direction of the mobile contact of the switch, causing the separation (breaking) between the fixed contact and the mobile contact of the switch or the connection therebetween.

The axial shift (according to the shift direction) of the mentioned coupling part is guided by means of a cap comprised in the actuating element, arranged between at least one conducting means (joining means between the mobile contact of the switch and the fixed contact of the disconnector) and said coupling part.

On the other hand, the actuating element can comprise at least one elastic element, such as, for example, a spring, which is arranged between the mobile contact of the switch and the coupling part. This elastic element is configured to collaborate by means of its compression and decompression in the connection and in the separation (breaking) of the mobile contact and the fixed contact of the switch, as well as in the maintenance of said fixed contacts in the connection position thereof, minimizing the oscillation. In this sense, one of the main drawbacks which actuating elements usually have, specifically the bounce effect of the mobile contact of the switch occurring at the end of the opening / connection travel during the breaking - connection operation is prevented, preventing a backward or bounce movement of the mobile contact of the vacuum switch from occurring after performing the breaking and/or connection operations, and therefore thus preventing a new electric arc (restrike) from occurring between the contacts of the switch.

During the breaking operation, to release the energy contained in the elastic element, the actuating element can comprise a clearance between the coupling part and the fixed contact of the disconnector and which furthermore allows overcoming the initial inertia of the switch in the separation (breaking) of its contacts.

The assembly of elements, comprised between the switch and the fixed contact of the disconnector, can be integrated in a casing, formed by at least one part, and forming part of the actuating element.

In an embodiment of the invention the disconnector can be a disconnector/ grounding disconnector. The disconnector can comprise a fixed contact, a mobile contact and a grounding contact, the mobile contact being rigidly joined to a second drive shaft corresponding to the actuating element, said second drive shaft being configured to cooperate in performing the connection - sectioning - grounding functions. Likewise, the mobile contact can be connected to the bypass bar by means of a rotary contact.

The disconnector/ grounding disconnector can comprise a casing, formed by at least one part, in which all its contacts and even the aforementioned second drive shaft can be incorporated.

In another possible embodiment, the disconnector can additionally comprise a grounding disconnector. The disconnector and the grounding disconnector can be linearly sliding, according to the shift direction (of the mobile contact of the switch).

In this embodiment of the invention, the disconnector comprises a fixed contact and a mobile contact, this mobile contact being rigidly joined to a mobile contact of the grounding disconnector, such that the shift of one of the two contacts causes the shift of the other contact.

The mobile contact of the disconnector is associated to the actuating element through a second actuating transmission element. On the other hand, the actuating element comprises a second drive shaft, transverse to the shift direction (of the mobile contact of the switch), cooperating with the second actuating transmission element in performing the connection - sectioning - grounding functions.

This second drive shaft comprises at least one mechanical transmission, such as, for example, a gear wheel, which meshes with the second actuating transmission element. The rotation of the second drive shaft thus causes the axial shift of the second actuating transmission element and, in turn, the axial shift of the mobile contact of the disconnector or of the grounding disconnector, which allows performing the connection - sectioning - grounding functions.

The actuating element can comprise a casing, formed by at least one part, in which the second drive shaft, the second actuating transmission element and the mobile contact of the disconnector are incorporated.

Both the mobile contact of the disconnector and the mobile contact of the grounding disconnector are connected to a bypass bar through one and the same connection element, said connection being able to be a sliding connection. In this sense, the bypass bar can be in contact and surrounding the connection element, allowing the axial and tangential sliding of said connection element.

The electric switchgear comprises at least one actuating element which is adapted to actuate the operating means performing the breaking - connection and/or connection - sectioning and/or grounding functions, transmitting to that end to these operating means the actuating force produced by an operating mechanism. Said actuating element comprises at least one coupling device which allows the coupling between said actuating element and the operating mechanism which can be outside the enclosure comprising the electric switchgear. The actuating element used is common for the three phases of each operating means, therefore the enclosure only comprises a hole through which it is traversed by the aforementioned coupling device, considerably reducing the dimensions of the cell and using in said hole a means ensuring the tightness of the enclosure, such as, for example, a gland.

Finally, both the bar of the main circuit and the bypass bar comprise connection elements, being able to consist of female-type bushings, male-type bushings or combinations thereof, and they can be accessed from the outer part of the enclosure comprising the switchgear, such that they allow configuring different electric diagrams.

### Description of the Drawings

To complement the description and for the purpose of aiding to better understand the features of the invention according to a preferred practical embodiment thereof, a set of drawings is attached as an integral part of said description, in which the following has been depicted with an illustrative and non-limiting character:
Figure 1 shows a perspective view of the electric switchgear object of the invention and according to a possible embodiment, in which the electric switchgear comprises a switch (1 a), a disconnector/grounding disconnector (1 d), at least one actuating element (3), and at least one bar (7) of the main circuit and one bypass bar (8) with their respective connection elements (24, 25).
Figure 2 shows a perspective view of the electric switchgear object of the invention and according to another possible embodiment, in which the electric switchgear comprises a switch (1 a), a disconnector (1 b), a grounding disconnector (1 c), at least one actuating element (3), and at least one bar (7) of the main circuit and one bypass bar (8) with their respective connection elements (24, 25).
Figure 3 shows a detail of a section view of a part of the actuating element (3) comprised between the switch (1 a) and the fixed contact (6) of the disconnector (1b) or of the disconnector/grounding disconnector (1d), according to the embodiments of Figures 1 and 2.
Figure 4 shows a detail of a perspective view of a part of the actuating element (3) comprised between the fixed contact (6) of the disconnector (1 b) and the bypass bar (8), according to the embodiment of Figure 2.
Figure 5 shows a detail of a perspective view of a part of the actuating element (3) comprised between the fixed contact (6) of the disconnector/grounding disconnector (1 d) and the bypass bar (8), according to the embodiment of Figure 1.
Figure 6 shows a perspective view of the electric switchgear object of the invention and according to the embodiments of Figures 1 and 2, in which the electric switchgear is integrated in an enclosure (23), the operating mechanism (32) being on its outer part.

### Preferred Embodiment of the Invention

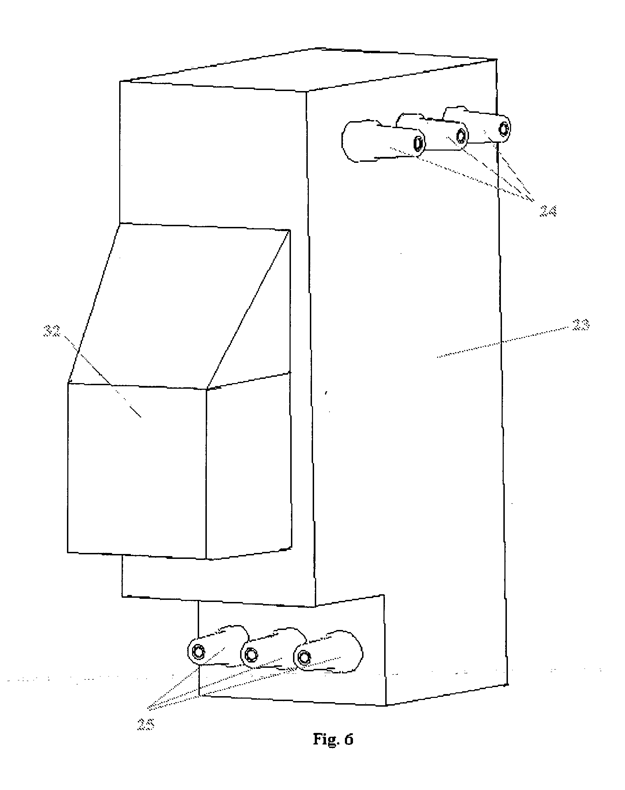

The electric switchgear object of the present invention is applied in electric power distribution installations, such as for example, electric transformer centers, distribution centers, substations, etc., for the protection and operation of electric circuits. As shown in Figure 6, said switchgear is integrated inside an enclosure (23), this enclosure (23) being able to be tight, and therefore insulated in a dielectric medium, such as for example sulfur hexafluoride (SF₆), dry air, oil, etc.

As observed in Figure 6, the electric switchgear comprises an operating mechanism (32) in the outer part of the enclosure (23), which produces an actuating energy which is transmitted, through an actuating element (3), to operating means for said electric switchgear, such that these operating means can perform the breaking and/or connection and/or sectioning and/or grounding functions.

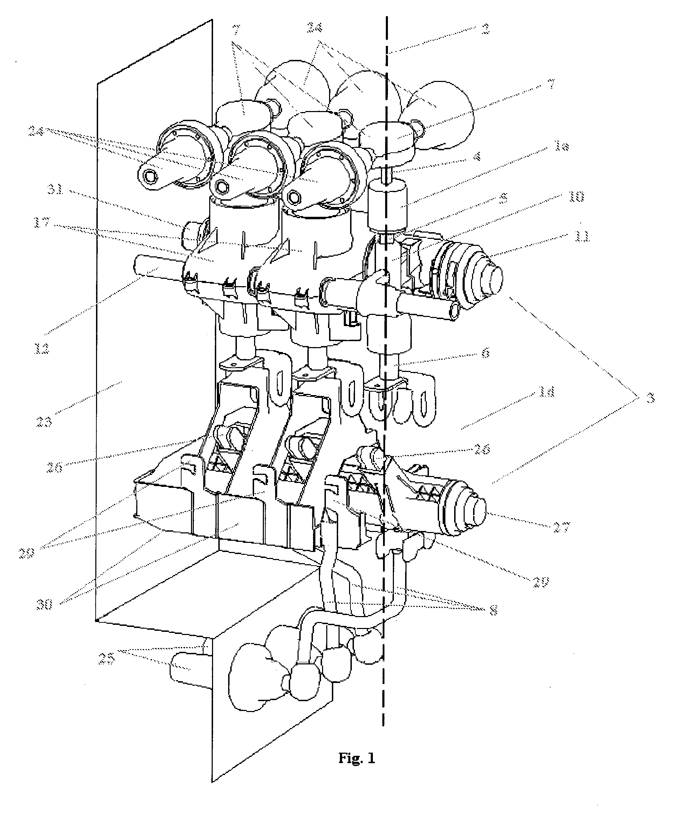

According to a first embodiment of the invention, as shown in Figure 1, the operating means comprise a switch (1 a) and a disconnector/grounding disconnector (1d), this disconnector/grounding disconnector (1d) being able to be a hinge-type rotary disconnector.

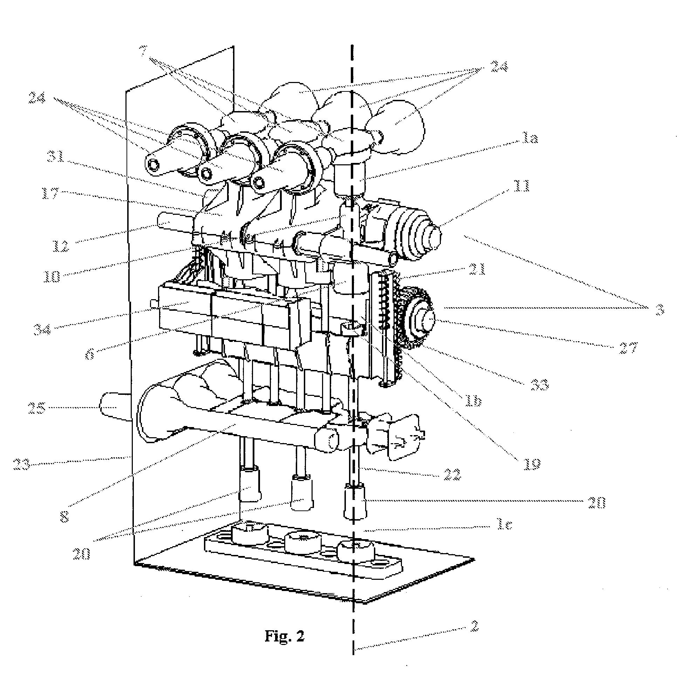

According to a second embodiment of the invention, as shown in Figure 2, the operating means comprise a switch (1 a), a disconnector (1 b) and a grounding disconnector (1 c), in this case said operating means being able to be linear sliding means.

In the two possible embodiments the operating means are installed in series.

The actuating force produced by the operating mechanism (32) is transmitted to the operating means by means of at least one actuating element (3), which is adapted to actuate the breaking - connection and/or connection - sectioning and/or grounding functions. Said actuating element (3) and the operating mechanism (32) are joined, traversing the enclosure (23) to that end, by means of at least one coupling device (31). In turn, the tightness of said enclosure (23) is ensured by means of the use of means such as, for example, glands.

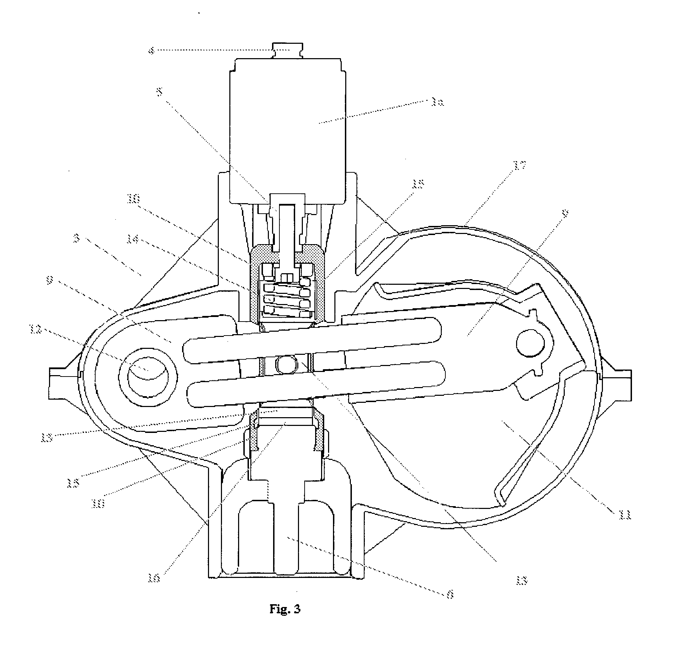

As shown in Figures 1 and 2, the switch (1 a) is installed in series with the disconnector (1b) or the disconnector/grounding disconnector (1 d), said switch (1 a) performing the breaking - connection functions. This switch (1 a) consists of a vacuum switch, with load breaking capacity or short circuit current breaking capacity. It internally houses a fixed contact (4) joined to a bar (7) of the main circuit and a mobile contact (5), which can shift according to a shift direction (2). The mentioned mobile contact (5) is joined to the fixed contact (6) of the disconnector (1b) or of the disconnector/grounding disconnector (1d) by means of at least one conducting means (10) corresponding to the actuating element (3). At the same time, as observed in Figure 3, the mobile contact (5) is associated to the actuating element (3) through a first actuating transmission element (9), said first actuating transmission element (9) being associated with a first drive shaft (11). This drive shaft (11), corresponding to the actuating element (3) and transverse to the shift direction (2) for the movement of the contacts of the operating means, cooperates with said transmission element (9) in performing the breaking - connection functions.

On the other hand, the actuating transmission element (9) is joined to a rotating shaft (12) transverse to the shift direction (2) for the movement of the contacts of the operating means, such that the rotation of the drive shaft (11) due to the actuating force of the operating mechanism (32), causes the pivoting of the transmission element (9) about the rotating shaft (12), and in summary, the axial shift of the mobile contact (5) of the switch (1a). A coupling part (13), belonging to the actuating element (3) and arranged inside at least one conducting means (10), collaborates in this axial shift of the mobile contact (5), acting as an intermediate element between the transmission element (9) and the mobile contact (5), causing by means of its axial shift the separation (breaking) of the contacts (4) and (5) or the connection between such contacts.

Likewise, as shown in Figure 3, the axial shift of said coupling part (13) is guided by a cap (15) arranged between at least one conducting means (10) and said coupling part (13).

Figure 3 shows how the actuating element (3) comprises at least one spring (14) arranged between the mobile contact (5) and the coupling part (13). Due to the axial shift of the coupling part (13), said spring (14) is compressed in the connection operation and decompressed in the breaking operation, thus collaborating in the separation of the contacts (4) and (5), as well as in the maintenance of said fixed contacts (4, 5) in the connection position thereof, minimizing oscillation. During the breaking operation, the energy accumulated during the connection operation in the spring (14) is released as a result of a clearance (16) comprised in the actuating element (3), which furthermore allows overcoming the initial inertia of the switch (1 a) in the separation (breaking) of its contacts (4, 5).

As shown in Figures 1 and 2, the assembly of elements, comprised between the switch (1 a) and the fixed contact (6) of the disconnector (1 b) or of the disconnector/grounding disconnector (1d), is integrated in a casing (17), formed by at least one part, and forming part of the actuating element (3).

The disconnector (1b) performing the connection - sectioning functions (Figure 2) or the disconnector/grounding disconnector (1d) performing the connection - sectioning - grounding functions (Figure 1) is an operating means with closing capacity against a short circuit, such that in the connection operation the switch (1 a) closes before the disconnector (1 b) or the disconnector/grounding disconnector (1d). Accordingly, the switch (1a) experiences no deterioration due to pre-arc in the closing, remaining in optimal conditions to break the current in the event of a fault.

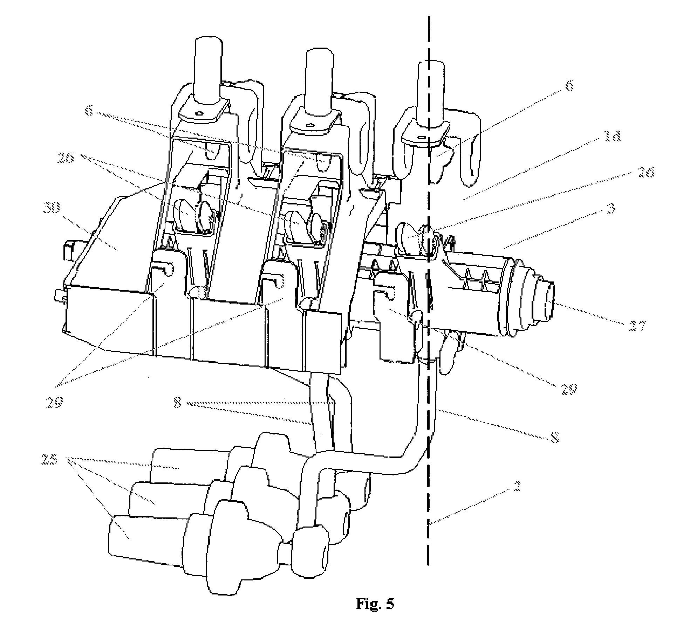

According to the first embodiment of the invention, as shown in Figures 1 and 5, the operating means comprise a switch (1a) and a disconnector/grounding disconnector (1d). The disconnector/grounding disconnector (1 d) comprises a fixed contact (6), a mobile contact (26) and a grounding contact (29), the mobile contact (26) being rigidly joined to a second drive shaft (27) corresponding to the actuating element (3), said second drive shaft (27) being configured to cooperate in performing the connection - sectioning - grounding functions. In this sense, the rotation of the second drive shaft (27) due to the actuating force of the operating mechanism (32) causes the rotation of the mobile contact (26), the connection, the sectioning or the grounding of the electric circuit being able to be established.

On the other hand, the mobile contact (26) of the disconnector/grounding disconnector (1d) is connected to a bypass bar (8) through a rotary contact. This disconnector/grounding disconnector (1d) comprises a casing (30), formed by at least one part, in which all its contacts (6, 26, 29) and even the second drive shaft (27) can be incorporated.

According to the second embodiment of the invention, as shown in Figure 2, the operating means comprise a switch (1 a), a disconnector (1 b) and a grounding disconnector (1 c). The disconnector (1 b) comprises a fixed contact (6) and a mobile contact (19), this mobile contact (19) being rigidly joined to a mobile contact (20) of the grounding disconnector (1 c), such that the shift of one of the two contacts (19, 20) causes the shift of the other contact (19, 20).

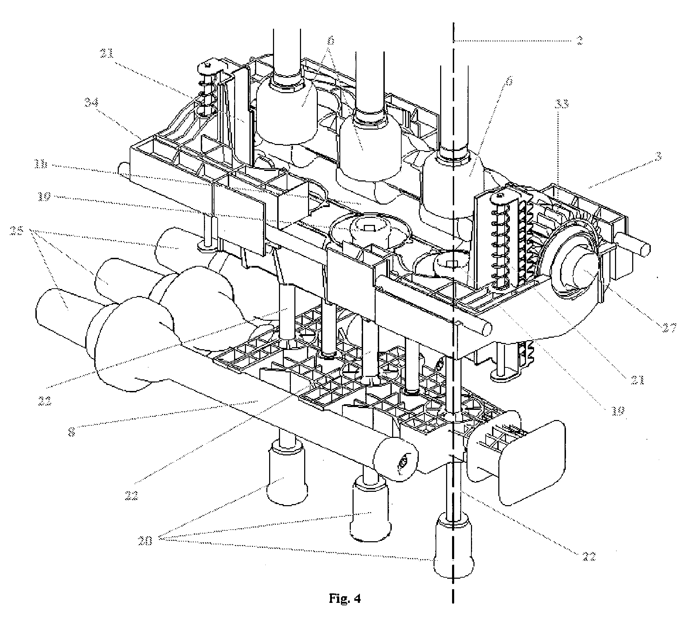

As shown in Figure 4, the mobile contact (19, 20) of the disconnector (1 b) or of the grounding disconnector (1c) is associated to the actuating element (3) through a second actuating transmission element (21). On the other hand, the actuating element (3) comprises a second drive shaft (27), transverse to the shift direction (2) of the operating means, cooperating with the second actuating transmission element (21) in performing the connection - sectioning - grounding functions.

This second drive shaft (27) comprises at least one mechanical transmission, such as for example a gear wheel (33), which meshes with the second actuating transmission element (21), as shown in Figure 4. The rotation of the second drive shaft (27) thus causes the axial shift, according to the shift direction (2), of the second actuating transmission element (21) and in turn, the axial shift, according to the shift direction (2) of the mobile contact (19, 20) of the disconnector (1 b) or of the grounding disconnector (1c), which allows performing the connection - sectioning - grounding functions. The actuating element (3) can comprise a casing (34) formed by at least one part, in which the second drive shaft (27), the second actuating transmission element (21) and the mobile contact (19) of the disconnector (1 b) are incorporated.

Both the mobile contact (19) of the disconnector (1 b) and the mobile contact (20) of the grounding disconnector (1 c) are connected to a bypass bar (8) through one and the same connection element (22), said connection being able to be a sliding connection. In this sense, the bypass bar (8) can be in contact and surrounding the connection element (22), allowing the axial and tangential sliding of said connection element (22).

Finally, as can be seen in Figures 1, 2 and 6, both the bar (7) of the main circuit and the bypass bar (8) comprise connection elements (24, 25), being able to consist of female-type, male-type bushings or combinations thereof, and can be accessed from the outer part of the enclosure (23) comprising the switchgear, such that they allow configuring different electric diagrams.

The reference numbers used in this text represent the following elements:
1a.- Switch
1b.- Disconnector
1c.- Grounding disconnector
1d.- Disconnector/grounding disconnector
2.- Shaft for the movement of the contacts of the operating means
3. - Actuating element
4.- Fixed contact of the switch 1a
5.- Mobile contact of the switch 1a
6.- Fixed contact of the disconnector (1b) or of the disconnector/grounding disconnector (1d)
7.- Bar of the main circuit
8.- Bypass bar
9.- First actuating transmission element
10.- Conducting means integral with the mobile contact (5) of the switch (1a)
11.- First drive shaft
12.- Rotating shaft
13.- Coupling part
14.- Spring
15.- Cap
16.- Clearance
17.- Casing
19.- Mobile contact of the disconnector (1b)
20.- Mobile contact of the grounding disconnector (1c)
21.- Second actuating transmission element
22.- Connection element between the bypass bar (8) and the mobile contact (19)/mobile contact (20)
23.- Enclosure of the electric switchgear
24, 25.- Female-type, male-type connection elements and combinations thereof
26.- Mobile contact of the disconnector/grounding disconnector (1d)
27.- Second drive shaft
29.- Grounding contact of the disconnector/grounding disconnector (1d)
30.- Casing of the disconnector/grounding disconnector (1d)
31.- Coupling device
32.- Operating mechanism
33.- Gear wheel
34.- Casing enveloping and protecting the drive shaft (27), the actuating transmission element (21) and the mobile contact (19) of the disconnector (1b)

In this text, the word "comprises" and its variants (such as "comprising", etc.) must not be interpreted in an excluding manner, i.e., they do not exclude the possibility that what has been described may include other elements, steps, etc.

On the other hand, the invention is not limited to the specific embodiments which have been described, but rather encompasses, for example, the variants which can be carried out by the person skilled in the art (for example, with respect to the choice of materials, dimensions, components, configuration, etc.), within what is inferred from the claims.

## Claims

1. Switchgear for electric distribution networks, comprising:
an enclosure (23);
operating means arranged between at least one bar (7) of a main circuit and at least one bypass bar (8), said operating means comprising at least one switch (1 a) and a disconnector (1 b)(1 d) connected in series;
a mechanical actuating element (3) for each operating means configured to actuate the operating means such that they can perform breaking and/or connection and/or sectioning and/or grounding functions; and,
an operating mechanism to produce the actuation of the actuating element;
wherein the operating mechanism is configured such that the actuating element (3) actuates the opening of the switch (1a) before the opening of the disconnector (1b) (1d) in a breaking and/or sectioning operation, but actuates the closing of the switch (1 a) before the closing of the disconnector (1 b) (1 d) in a connection operation;
**characterized in that** the operating mechanism is configured such that the actuating element (3) actuates the switch (1 a) and the disconnector (1 b), (1 d) automatically, one after the other.

2. Switchgear according to claim 1, wherein the disconnector (1b) (1d) is a disconnector with closing capacity against a short circuit.

3. Switchgear according to any of the previous claims, wherein the switch (1 a) comprises a vacuum switch housing a fixed contact (4) joined to the bar (7) of the main circuit and a mobile contact (5) which can shift according to a shift direction (2), the mentioned mobile contact (5) being joined to a fixed contact (6) of the disconnector (1b) (1d) by means of conducting means (10).

4. Switchgear according to claim 3, wherein the mobile contact (5) is associated to the actuating element (3) through a first actuating transmission element (9) and in that the actuating element (3) comprises a first drive shaft (11), transverse to the shift direction (2), cooperating with the actuating transmission element (9) in the breaking - connection functions, and in that the actuating transmission element (9) can pivot about a rotating shaft (12) transverse to the shift direction (2), the actuating element (3) comprising a coupling part (13) between the actuating transmission element (9) and at least one conducting means (10), said coupling part (13) being assembled inside at least one conducting means (10) and said coupling part (13) configured to collaborate by means of its axial shift both in the separation of the contacts (4) and (5) and in the connection thereof, said part (13) being guided in this axial shift through the inside of at least one conducting means (10) by means of a cap (15) which the actuating element (3) comprises.

5. Switchgear according to claim 4, wherein the actuating element (3) comprises at least one elastic element (14), said at least one elastic element (14) being configured to collaborate by means of its compression and decompression in the connection and in the separation of the mobile contact (5) and the fixed contact (4), as well as in the maintenance of the fixed contacts (5), (4) in their connection position, minimizing oscillation, and in that the actuating element (3) comprises a clearance (16) between the coupling part (13) and the fixed contact (6) of the disconnector (1b) (1 d), which allows releasing the energy contained in the elastic element (14) and which collaborates in overcoming the initial inertia of the switch (1 a) in the separation of its contacts (4) and (5).

6. Switchgear according to any previous claim, wherein the disconnector (1 d) is a disconnector/grounding disconnector.

7. Switchgear according to claim 6, **characterized in that** the disconnector (1d) comprises a fixed contact (6), a mobile contact (26) and a grounding contact (29), the mobile contact (26) being rigidly joined to a second drive shaft (27) corresponding to the actuating element (3), said second shaft (27) being configured to cooperate in performing the connection - sectioning - grounding functions and **in that** the mobile contact (26) is connected to the bypass bar (8) by means of a rotating contact.

8. Switchgear according to any of claims 1 to 5, additionally comprising a grounding disconnector (1 c).

9. Switchgear according to claim 8, wherein the disconnector (1 b) and the grounding disconnector (1c) are linearly sliding, according to the shift direction (2).

10. Switchgear according to claim 9, **characterized in that** the disconnector (1b) comprises a fixed contact (6) and a mobile contact (19), this mobile contact (19) being rigidly joined to a mobile contact (20) of the grounding disconnector (1c), such that the shift of one of the two contacts (19, 20) causes the shift of the other contact (19, 20).

11. Switchgear according to claim 10, wherein the mobile contact (19) is associated to the actuating element (3) through a second actuating transmission element (21), the actuating element (3) comprising a second drive shaft (27), transverse to the shift direction (2), cooperating with the second actuating transmission element (21) in performing the connection - sectioning - grounding functions, and in that the second drive shaft (27) comprises at least one gear wheel (33) which meshes with the second actuating transmission element (21), such that the rotation of the second drive shaft (27) causes the axial shift of the second actuating transmission element (21), and in turn the axial shift of the mobile contact (19, 20) of the disconnector (1 b) or of the grounding disconnector (1c).

12. Switchgear for electric distribution networks according to claims 10 or 11 , **characterized in that** the mobile contact (19) of the disconnector (1b) and the mobile contact (20) of the grounding disconnector (1c) are connected to the bypass bar (8) through one and the same connection element (22).

13. Switchgear according to claims 4 or 7, **characterized in that** the actuating element (3) comprises a coupling device (31) between the operating mechanism (32) and each of the drive shafts (11, 27).

14. Switchgear according to any of the previous claims, wherein the enclosure (23) is tight and incorporates a dielectric fluid.

15. Switchgear according to any of the previous claims, wherein the bar (7) of the main circuit and the bypass bar (8) comprise connection elements (24), (25) which can be accessed from outside the enclosure (23).

## Patentansprüche

1. Schaltanlage für Stromverteilungsnetze, umfassend:
ein Gehäuse (23);
eine Betriebseinrichtung, die zwischen zumindest einem Stab (7) des Hauptschaltkreises und zumindest einem Bypass-Stab (8) angeordnet ist, wobei die Betriebseinrichtung zumindest einen Schalter (1 a) und einen Trennschalter (1 b) (1 d) umfasst, die miteinander seriell verbunden sind;
ein mechanisches Befätigungselement (3) fr jede Betriebseinrichtung, dazu ausgebildet, die Betriebseinrichtungen so zu befätigen, dass diese Unterbrechungs- und/oder Verbindungs- und/oder Aufteilungs- und/oder Erdungsfunktionen durchführen können; und
einen Betriebsmechanismus zum Erzeugen der Befätigung des Befätigungselements,
wobei der Befätigungsmechanismus derart konfiguriert ist, dass das Befätigungselement (3) dasÖffnen des Schalters (1 a) vor demÖffnen des Trennschalters (1 b) (1 d) in einer Unterbrechungs- und/oder Aufteilungsoperation befätigt, jedoch das Schließen des Schalters (1a) vor dem Schließen des Trennschalters (1 b) (1 d) in einer Verbindungsoperation befätigt;
**dadurch gekennzeichnet, dass** der Befätigungsmechanismus so konfiguriert ist, dass das Befätigungselement (3) den Schalter (1 a) und den Trennschalter (1 b) (1d) automatisch nacheinander befätigt.

2. Schaltanlage nach Anspruch 1, wobei der Trennschalter (1 b) (1 d) ein Trennschalter mit Schlilleßkapazifät gegen einen Kurschluss ist.

3. Schaltanlage nach einem beliebigen der vorhergehenden Ansprüche, wobei der Schalter (1 a) einen Vakuumschalter umfasst, in dem ein fester Kontakt (4), der mit dem Stab (7) des Hauptschaltkreises verbunden ist, und einen mobilen Kontakt (5) beherbergt ist, der in einer Verschiebungsrichtung (2) verschiebbar ist, wobei der erwähnte mobile Kontakt (5) mit einem festen Kontakt (6) des Trennschalters (1 b) (1 d) durch Leitungsmittel (10) verbunden ist.

4. Schaltanlage nach Anspruch 3, wobei der mobile Kontakt (5) mit dem Befätigungselement (3)über ein erstes Befätigungsübertragungselement (9) verkrüpft ist, und wobei das Befätigungselement (3) einen ersten quer zu der Verschieberichtung (2) verlaufenden Antriebsschaft (11) umfasst, der mit dem Befätigungsübertragungselement (9) bei den Unterbrechungs-Verbindungsfunktionen zusammenwirkt, wobei das Befätigungsübertragungselement (9) um eine quer zu der Verschiebungsrichtung (2) verlaufenden Drehschaft (12) drehbar ist, wobei das Befätigungselement (3) ein Kupplungsteil (13) zwischen dem Befätigungsübertragungselement (9) und zumindest einem Leitungsmittel (10) umfasst, wobei das Kupplungsteil (13) innerhalb zumindest einem Leitungsmittel (10) angeordnet ist, und wobei das Kupplungsteil (13) konfiguriert ist, durch dessen axiale Verschiebung sowohl bei dem Trennen der Kontakte (4) und (5) und deren Verbindung mitzuwirken, wobei das Teil (13) in dessen axialer Verschiebung durch das Innere von zumindest einem Leitungsmittel (10) durch einen Aufsatz (15) geführt ist, den das Befätigungselement (3) umfasst.

5. Schaltanlage nach Anspruch 4, wobei das Befätigungselement (3) zumindest ein elastisches Element (14) umfasst, wobei das zumindest eine elastische Element (14) dazu konfiguriert ist, mittels dessen Kompression und Dekompression bei dem Verbinden und bei dem Trennen des mobilen Kontakts (5) und des festen Kontakts (4) und bei dem Aufrechterhalten der festen Kontakte (5), (4) in deren Verbindungsposition mitzuwirken, wobei die Oszillation minimiert wird, und dadurch, wobei das Befätigungselement (3) eine Ausnehmung (16) zwischen dem Kupplungsteil (13) und dem festen Kontakt (6) des Trennschalters (1 b) (1 d) umfasst, was ein Freisetzen der in dem elastischen Element (14) enthaltenen Energie ermöglicht, und wodurch einÜberwinden der Anfangsträgheit des Schalters (1 a) beim Trennen der Kontakte (4) und (5) untersfützt wird.

6. Schaltanlage nach einem beliebigen der vorhergehenden Ansprüche, wobei der Trennschalter (1 d) ein Trenn-/ Erdungs-Trennschalter ist.

7. Schaltanlage nach Anspruch 6, **dadurch gekennzeichnet, dass** der Trennschalter (1 d) einen festen Kontakt (6), einen mobilen Kontakt (26) und einen Erdungskontakt (29) umfasst, wobei der mobile Kontakt (26) fest mit einem zweiten Antriebsschaft (27) verbunden ist, der mit dem Befätigungselement (3) korrespondiert, wobei der zweite Schaft (27) zum Zusammenwirken beim Durchführen der Verbindungs-, Aufteilungs-, Erdungsfunktionen konfiguriert ist, und dadurch, dass der mobile Kontakt (26) mit dem Bypass-Stab (8) durch einen Drehkontakt verbunden ist.

8. Schaltanlage nach einem beliebigen der Ansprüche 1 bis 5, ferner umfassend einen Erdungstrennschalter (1 c).

9. Schaltanlage nach Anspruch 8, wobei der Trennschalter (1 b) und der Erdungstrennschalter (1 c) entlang der Verschiebungsrichtung (2) linear verschiebbar sind.

10. Schaltanlage nach Anspruch 9, **dadurch gekennzeichnet, dass** der Trennschalter (1 b) einen festen Kontakt (6) und einen mobilen Kontakt (19) umfasst, wobei der mobile Kontakt (19) mit einem mobilen Kontakt (20) des Erdungstrennschalters (1c) fest verbunden ist, so dass das Verschieben eines der zwei Kontakte (19, 20) das Verschieben des anderen Kontaktes (19, 20) bewirkt.

11. Schaltanlage nach Anspruch 10, wobei der mobile Kontakt (19) mit dem Befätigungselement (3)über ein zweites Befätigungsübertragungselement (21) verkrüpft ist, wobei das Befätigungselement (3) einen zweiten Antriebsschaft (27) umfasst, der quer zu der Verschiebungsrichtung (2) verläuft, und der mit dem zweiten Befätigungsübertragungselement (21) beim Durchführen der Verbindungs-, Aufteilungs-, Erdungsfunktionen zusammenwirkt, wobei der zweite Antriebsschaft (27) zumindest ein Zahnrad (33) umfasst, das mit dem zweiten Befätigungsübertragungselement (21) kämmt, so dass die Drehung des zweiten Antriebsschafts (27) die axiale Verschiebung des zweiten Befätigungsübertragungselements (21) und wiederum die axiale Verschiebung des mobilen Kontakts (19, 20) des Trennschalters (1 b) oder des Erdungstrennschalters (1 c) bewirkt.

12. Schaltanlage fr Stromverteilungsnetze nach Anspruch 10 oder 11, **dadurch gekennzeichnet, dass** der mobile Kontakt (19) des Trennschalters (1 b) und der mobile Kontakt (20) des Erdungstrennschalters (1 c) mit dem Bypass-Stab (8) durch ein und dasselbe Verbindungselement (22) verbunden sind.

13. Schaltanlage nach Anspruch 4 oder 7, **dadurch gekennzeichnet, dass** das Befätigungselement (3) eine Kupplungseinrichtung (31) zwischen dem Befätigungsmechanismus (32) und jedem der Antriebsschäfte (11, 27) umfasst.

14. Schaltanlage nach einen der vorhergehenden Ansprüche, wobei das Gehäuse (23) dicht ist und ein dielektrisches Fluid beinhaltet.

15. Schaltanlage nach einem beliebigen der vorhergehenden Ansprüche, wobei der Stab (7) des Hauptschaltkreises und der Bypass-Stab (8) Verbindungselemente (24), (25) umfassen, die von außerhalb des Gehäuses (23) zugänglich sind.

## Revendications

1. Appareillage de commutation pour des réseaux de distribution électrique, comprenant :
une enceinte (23) ;
des moyens opérationnels, agencés entre au moins une barre (7) d'un circuit principal et au moins une barre de dérivation (8), lesdits moyens opérationnels comprenant au moins un interrupteur (1a) et un sectionneur (1b) (1d) connectés en série ;
un élément d'actionnement mécanique (3) pour chaque moyen opérationnel, destiné à actionner les moyens opérationnels de sorte qu'ils puissent assurer des fonctions de coupure et/ou de connexion et/ou de sectionnement et/ou de mise à la terre ; et
un mécanisme opérationnel pour entraîner l'actionnement de l'élément d'actionnement ;
dans lequel le mécanisme opérationnel est configuré de sorte que l'élément d'actionnement (3) entraîne l'ouverture de l'interrupteur (1a) avant l'ouverture du sectionneur (1b) (1d) au cours d'une opération de coupure et/ou de sectionnement, mais entraîne la fermeture de l'interrupteur (1a) avant la fermeture du sectionneur (1b) (1d) au cours d'une opération de connexion ;
**caractérisé en ce que** le mécanisme opérationnel est configuré de sorte que l'élément d'actionnement (3) entraîne l'actionnement automatique de l'interrupteur (1a) et du sectionneur (1b) (1d), l'un après l'autre.

2. Appareillage de commutation selon la revendication 1, dans lequel le sectionneur (1b) (1d) est un sectionneur présentant une capacité de fermeture par rapport à un court-circuit.

3. Appareillage de commutation selon l'une quelconque des revendications précédentes, dans lequel l'interrupteur (1a) comprend un interrupteur sous vide comportant un contact fixe (4) relié à la barre (7) du circuit principal, et un contact mobile (5), pouvant se déplacer dans une direction de déplacement (2), ledit contact mobile (5) étant relié à un contact fixe (6) du sectionneur (1b) (1d) par l'intermédiaire de moyens conducteurs (10).

4. Appareillage de commutation selon la revendication 3, dans lequel le contact mobile (5) est associé à l'élément d'actionnement (3) par l'intermédiaire d'un premier élément de transmission d'actionnement (9), l'élément d'actionnement (3) comprenant un premier arbre d'entraînement (11), transversal à la direction de déplacement (2), coopérant avec l'élément de transmission d'actionnement (9) dans les fonctions de freinage-connexion, l'élément de transmission d'actionnement (9) pouvant pivoter autour d'un arbre rotatif (12) transversal à la direction de déplacement (2), l'élément d'actionnement (3) comprenant une pièce d'accouplement (13) entre l'élément de transmission d'actionnement (9) et au moins un moyen conducteur (10), ladite pièce d'accouplement (13) étant assemblée à l'intérieur d'au moins un moyen conducteur (10) et ladite pièce d'accouplement (13) étant destinée à coopérer par l'intermédiaire de son déplacement axial, tant lors de la séparation des contacts (4) et (5) que lors de la connexion de ceux-ci, ladite pièce (13) étant guidée dans son déplacement axial à travers l'intérieur d'au moins un moyen conducteur (10) par l'intermédiaire d'un capuchon (15) que comprend l'élément d'actionnement (3).

5. Appareillage de commutation selon la revendication 4, dans lequel l'élément d'actionnement (3) comprend au moins un élément élastique (14), ledit au moins un élément élastique (14) étant destiné à coopérer par l'intermédiaire de sa compression et de sa décompression lors de la connexion et de la séparation du contact mobile (5) et du contact fixe (4), ainsi que lors de la retenue des contacts fixes (5), (4) dans leur position de connexion, réduisant au minimum les oscillations, l'élément d'actionnement (3) comprenant un dégagement (16) entre la pièce d'accouplement (13) et le contact fixe (6) du sectionneur (1b) (1d), permettant la libération de l'énergie contenue dans l'élément élastique (14) et coopérant pour surmonter l'inertie initiale de l'interrupteur (1a) lors de la séparation de ses contacts (4) et (5).

6. Appareillage de commutation selon l'une quelconque des revendications précédentes, dans lequel le sectionneur (1d) est un sectionneur/sectionneur de mise à la terre.

7. Appareillage de commutation selon la revendication 6, **caractérisé en ce que** le sectionneur (1d) comprend un contact fixe (6), un contact mobile (26) et un contact de mise à la terre (29), le contact mobile (26) étant relié de manière rigide à un deuxième arbre d'entraînement (27) correspondant à l'élément d'actionnement (3), ledit deuxième arbre étant destiné à coopérer lors de l'exécution des fonctions de connexion-sectionnement-mise à la terre, le contact mobile (26) étant connecté à une barre de dérivation (8) par l'intermédiaire d'un contact rotatif.

8. Appareillage de commutation selon l'une quelconque des revendications 1 à 5, comprenant en outre un sectionneur de mise à la terre (1c).

9. Appareillage de commutation selon la revendication 8, dans lequel le sectionneur (1b) et le sectionneur de mise à la terre (1c) effectuent un glissement linéaire, dans la direction de déplacement (2).

10. Appareillage de commutation selon la revendication 9, **caractérisé en ce que** le sectionneur (1b) comprend un contact fixe (6) et un contact mobile (19), ce contact mobile (19) étant relié de manière rigide à un contact mobile (20) du sectionneur de mise à la terre (1c), de sorte que le déplacement de l'un des deux contacts (19, 20) entraîne le déplacement de l'autre contact (19, 20).

11. Appareillage de commutation selon la revendication 10, dans lequel le contact mobile (19) est associé à l'élément d'actionnement (3) par l'intermédiaire d'un deuxième élément de transmission d'actionnement (21), l'élément d'actionnement (3) comprenant un deuxième arbre d'entraînement (27), transversal à la direction de déplacement (2), coopérant avec le deuxième élément de transmission d'actionnement (21) lors de l'exécution des fonctions de connexion-sectionnement-mise à la terre, le deuxième arbre d'entraînement (27) comprenant au moins une roue d'engrenage (33), engrenée avec le deuxième élément de transmission d'actionnement (21), de sorte que la rotation du deuxième arbre d'entraînement (27) entraîne le déplacement axial du deuxième élément de transmission d'actionnement (21), entraînant à son tour le déplacement axial du contact mobile (19, 20) du sectionneur (1b) ou du sectionneur de mise à la terre (1c).

12. Appareillage de commutation pour des réseaux de distribution électrique selon les revendications 10 ou 11, **caractérisé en ce que** le contact mobile (19) du sectionneur (1b) et le contact mobile (20) du sectionneur de mise à la terre (1c) sont connectés à la barre de dérivation (8) par l'intermédiaire d'un même élément de connexion (22).

13. Appareillage de commutation selon les revendications 4 ou 7, **caractérisé en ce que** l'élément d'actionnement (3) comprend un dispositif d'accouplement (31) entre le mécanisme opérationnel (32) et chacun des arbres d'entraînement (11, 27).

14. Appareillage de commutation selon l'une quelconque des revendications précédentes, dans lequel l'enceinte (23) est étanche et incorpore un fluide diélectrique.

15. Appareillage de commutation selon l'une quelconque des revendications précédentes, dans lequel la barre (7) du circuit principal et la barre de dérivation (8) comprennent des éléments de connexion (24), (25) accessibles à partir de l'extérieur de l'enceinte (23).
